# EUROPÄISCHE PATENTSCHRIFT

(11) **EP 2 286 120 B1**
(45) Veröffentlichungstag und Bekanntmachung des Hinweises auf die Patenterteilung: **05.03.2014**
(21) Anmeldenummer: 09749594.9
(22) Anmeldetag: 18.05.2009
(51) Int. Cl.: F16K 11/074, F16K 37/00, F16N 27/02

(54) **SCHMIERMITTELWEGEVENTIL**
LUBRICANT DIRECTIONAL CONTROL VALVE
DISTRIBUTEUR À LUBRIFIANT

(30) Priorität: 21.05.2008 DE 102008024624; 11.06.2008 DE 102008027712
(43) Veröffentlichungstag der Anmeldung: 23.02.2011
(73) Patentinhaber: AB SKF, 415 50 Göteborg (SE)
(72) Erfinder: SPIESS, Götz, 14089 Berlin (DE); NELSON, Hans-Dieter, 16341 Panketal (DE)
(74) Vertreter: Kohl, Thomas
(86) Internationale Anmeldenummer: PCT/EP2009/003515
(87) Internationale Veröffentlichungsnummer: WO 2009/141104

(56) Entgegenhaltungen:
- DE-A1- 10 323 661
- DE-U1- 20 300 467
- US-A- 3 889 878
- US-A- 6 098 646
- US-A1- 2004 035 475
- US-A1- 2004 163 720

## Beschreibung

Die Erfindung betrifft ein Schmiermittelwegeventil.

Bei heute üblichen Schmierstoffverteilungs- und -transportsystemen kommen Mehrwegeventile, beispielsweise 2/2-Wegeventile zum Einsatz, die oftmals gegen eine Federkraft elektromagnetisch geschaltet werden. Diese Schmierstoffwegeventile sind aufgrund ihres nicht ganz unkomplizierten Aufbaus vergleichsweise kostenintensiv. US 3889878 offenbart ein Schmiermittelwegeventil gemäß dem Oberbegriff des Anspruchs 1.

Eine Aufgabe der vorliegenden Erfindung ist es daher, ein verbessertes Schmiermittelwegeventil zu schaffen, das bei vergleichbarer Funktionalität mit einer günstigeren Kostenposition einhergeht.

Die Aufgabe wird durch den Gegenstand des Anspruchs 1 gelöst. Vorteilhafte Ausgestaltungen sind in den Unteransprüchen beschrieben.

Gemäß Anspruch 1 beinhaltet ein Schmiermittelwegeventil folgende Merkmale:
- Ein begrenztes Raumvolumen mit wenigstens zwei Öffnungen für ein Zu- und/oder Abführen des Schmiermittels,
- beide Öffnungen sind in einer das Raumvolumen begrenzenden Ebene angeordnet, und
- der Ebene unmittelbar und im Wesentlichen dicht gegenüberliegend ist ein wenigstens verschwenkbares, motorisch antreibbares Drehelement angeordnet, das derart ausgebildet und verschwenkbar ist, dass wenigstens eine der Öffnungen oder beide mit dem Raumvolumen verbindbar oder demgegenüber verschließbar sind,
- das Drehelement ist mit wenigstens einer, die beiden Stirnseiten des Drehelements verbindenden Durchdringung ausgebildet,
- das Drehelement selbst oder ein synchron mit dem Drehelement mitdrehendes Element ist derart ausgebildet, dass eine Verdrehposition des Drehelements gegenüber dem Raumvolumen detektierbar ist,
- das Drehelement selbst oder das mitdrehende Element ist an der Winkelposition der Durchdringung des Drehelements mit einem Geber ausgebildet,
- an den Winkelpositionen der Öffnungen ist das Wegeventil jeweils mit einem Betätigungselement ausgebildet, und das jeweilige Betätigungselement ist bei übereinstimmender Verdrehposition des Gebers mit dem jeweiligen Betätigungselement betätigbar,
- eine derartige Steuerung, dass bei übereinstimmender Position von Geber und Betätigungselement der motorische Antrieb des Drehelements stoppt.

Dadurch, dass in einer Ausbildung der Erfindung eine mit einem Durchgangsloch versehene, drehbar gelagerte und zum Beispiel von einem Motor angetriebene Platte einen Schmiermittelauslass ermöglicht, wenn eine Schmiermittelauslassöffnung und das Durchgangsloch übereinander liegen, ist mit Vorteil ein extrem einfach aufgebautes und damit kostengünstig herstellbares Schmiermittelwegeventil geschaffen, so dass dieses Schmiermittelwegeventil bislang eingesetzte aufwändige 2/2-Wegeventile mit Vorteil ersetzen kann. Dabei wird beispielsweise eine elektronische Steuerung verwendet, um den Motorlauf bei Übereinstimmung von Schmiermittelauslassöffnung und Durchgangsloch automatisch zu stoppen.

In einer vorteilhaften Ausgestaltung ist das Drehelement entsprechend einer Kreisscheibe ausgebildet, das Raumvolumen ist wenigstens im Bereich der Kreisscheibe entsprechend kreiszylindrisch ausgebildet, die Öffnungen sind mit ihren Mittelpunkten auf einer gemeinsamen, zur Drehachse der Kreisscheibe konzentrischen Kreislinie angeordnet und die Kreisscheibe ist mit einer axialen Durchdringungen ausgebildet, die entsprechend der Kreislinie der Öffnungen von der Drehachse der Kreisscheibe beabstandet ist. Damit wird mit besonderem Vorteil ein noch mal besonders einfacher und damit kosteneffektiver Aufbau des erfindungsgemäßen Schmiermittelwegeventils erzielt.

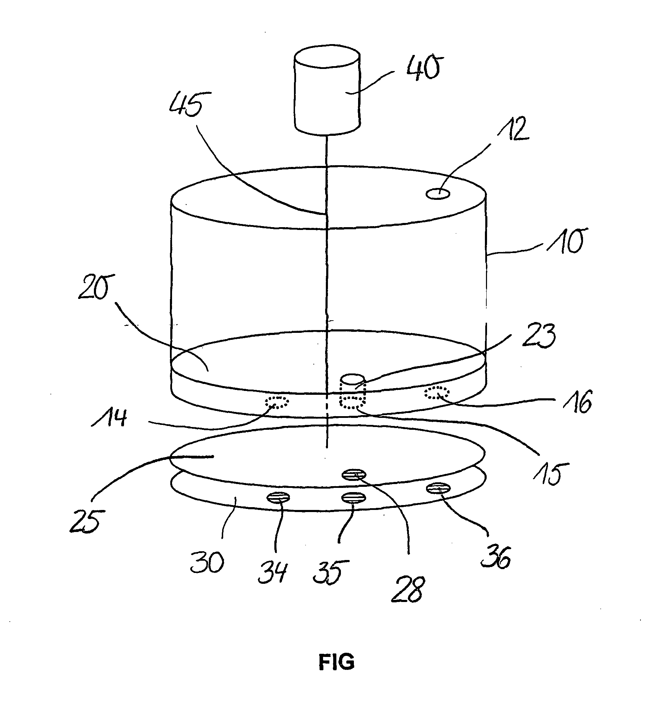

Weitere Vorteile, Merkmale und Einzelheiten der Erfindung ergeben sich aus dem im Folgenden beschriebenen Ausführungsbeispiel der Erfindung anhand der Figur.

Die Figur zeigt als ein Ausführungsbeispiel der Erfindung in perspektivischer Ansicht ein Mehrwegeventil zur Steuerung des Flusses eines Schmierstoffs. Dabei umfasst das Mehrwegeventil ein im Wesentlichen gegenüber seiner Umgebung hin abgeschlossenes kreiszylindrisches Raumvolumen 10, wobei in der Figur der Übersichtlichkeit halber nur die Begrenzung des Raumvolumens 10 sozusagen durchsichtig dargestellt ist. Die obere Stirnseite des Raumvolumens 10 umfasst dabei eine kreisförmige Zuführöffnung 12, durch die hindurch der Schmierstoff in das Raumvolumen 10 eingebracht wird. Die untere Stirnseite des Raumvolumens 10 ist mit drei kreisförmigen Abführöffnungen 14, 15 und 16 für ein Abführen des Schmierstoffs aus dem Raumvolumen 10 ausgebildet. Dabei sind die Abführöffnungen 14, 15 und 16 mit ihren Mittelpunkten auf einer gemeinsamen, zur Stirnseite des kreiszylindrischen Raumvolumens 10 konzentrischen Kreislinie liegend angeordnet. Die Zuführ- und Abführöfnungen 12, 14, 15 und 16 sind dabei beispielsweise zum daran Anschließen von Schmierstoffleitungen ausgebildet.

Der unteren Stirnseite des Raumvolumens 10 unmittelbar gegenüber und im Wesentlichen dicht anliegend ist eine kreisförmige Scheibe 20 drehbar im Raumvolumen 10 angeordnet. Diese Scheibe 20 umfasst eine die Scheibe 20 axial durchdringende kreiszylindrische Durchdringung 23. Durch ein Drehen der Scheibe 20 kann die untere Öffnung der Durchdringung 23 in Übereinstimmung mit einer der Abführöffnungen 14, 15 und 16 gebracht werden, so dass ein Abführen des Schmierstoffes aus dem Raumvolumen 10 über die jeweilig gewählte Abführöffnung 14, 15 oder 16 bei gleichzeitigem Verschluss der anderen Abführöffnungen 14, 15 und 16 ermöglicht wird. Für ein Drehen der Scheibe 20 ist die Scheibe 20 über eine Welle 45 beispielsweise mit einem Getriebemotor 40 verbunden. Dabei ist die Welle 45 drehbeweglich durch die obere Stirnseite des Raumvolumens 10 hindurchgeführt.

Damit weiterhin die Drehbewegung der Scheibe 20 so gesteuert werden kann, dass die Durchdringung 23 der Scheibe 20 exakt mit einer der Abführöffnungen 14, 15 oder 16 fluchtet, sind bei dem Mehrwegeventil noch folgende weitere Elemente vorgesehen: Die Welle 45 ist weiterhin auch durch die untere Stirnseite des Raumvolumens 10 hindurchgeführt und dort fest, wie auch die Scheibe 20, mit einer weiteren Scheibe 25 verbunden. Auf der weiteren Scheibe 25 ist an der gleichen Winkelposition, wie die Durchdringung 23 bei der Scheibe 20, ein Magnet 28 beispielsweise in der Ausbildung als Permanentmagnet angeordnet. Unterhalb der weiteren Scheibe 25 ist eine bezüglich des Raumvolumens 10 ortsfeste Platine 30 angeordnet, auf der in Übereinstimmung mit den Winkelpositionen der Abführöffnungen 14, 15 und 16 magnetisch betätigbare Betätigungselemente 34, 35 und 36, beispielsweise in der Ausbildung als Reed-Relais angeordnet sind. Wird nun die Welle 45 durch den Motor 40 und damit auch die Scheibe 20 und die weitere Scheibe 25 gedreht, so signalisiert dasjenige der Betätigungselemente 34, 35 oder 36, über dem gerade der Magnet 28 steht, dass die entsprechende Abführöffnung 14, 15 oder 16 mit der Durchdringung 23 der Scheibe 20 fluchtet, so dass bei Bedarf die Drehung in einer dieser fluchtenden Position gestoppt werden kann.

Mit besonderem Vorteil kann durch das vorausgehend beschriebene Mehrwegeventil beispielsweise eine konventionelle Anordnung von drei mal 2/2-Wegeventilen ersetzt werden, ohne dass dafür die bisherige Ansteuerung der drei mal 2/2-Wegeventile abgeändert werden muss, was im Folgenden näher erläutert wird: Üblicherweise wird die Anordnung aus drei mal 2/2-Wegeventilen über eine Steuerspannung gesteuert, wobei für ein Ansteuern eines der Ventile ein erster Anschluss des ersten Ventils, eine erster Anschluss des zweiten Ventils oder eine erster Anschluss des dritten Ventils mit der Steuerspannung beaufschlagt wird und die zweiten Anschlüsse der Ventile mit einer Masse der Steuerspannung verbunden sind. Damit nunmehr das vorausgehend beschriebene Mehrwegeventil ohne eine Änderung der beschriebenen Steuerung der konventionellen Anordnung eines drei mal 2/2-Wegeventils diese Anordnung ersetzen kann, ist das Mehrwegeventil einfach wie folgt ausgestalten: Die Betätigungselemente 34, 35 und 36 sind derart als magnetisch betätigbare Schalter ausgebildet, dass bei übereinstimmender Verdrehposition des Magnets 28 mit dem jeweiligen Betätigungselement 34, 35 oder 36 der jeweilige Schalter öffnet. Weiterhin ist jeweils einer der Anschlüsse der Betätigungselemente 34, 35 und 36 zum Beaufschlagen mit der Steuerspannung vorgesehen, wobei die zweiten Anschlüsse der Betätigungselemente 34, 35 und 36 mit einem ersten Anschluss des Motors 40 verbunden sind und der zweite Anschluss des Motors 40 mit einer Masse der Steuerspannung verbunden ist. Damit wird mit Vorteil ohne Anpassung der Ansteuerung ein Ersatz konventioneller Ventilanordnungen durch das erfindungsgemäße Mehrwegeventil ermöglicht. Der Motor 40 wird dann bei Übereinstimmung der Durchdringung 23 mit der gewünschten, durch das Beaufschlagen des entsprechenden Betätigungselements 34, 35 oder 36 mit der Steuerspannung angewählten Abführöffnung 14, 15 oder 16 sozusagen automatisch durch die Öffnerfunktion des entsprechenden Betätigungselements 34, 35 oder 36 gestoppt. Damit ist weiterhin mit besonderem Vorteil beispielsweise ein so realisiertes 5/4-Wegeventil so ansteuerbar, wie es ansonsten mit stattdessen erforderlichen vier Einzel-2/2-Wegeventilen möglich ist.

In anderen Ausführungsförmen sind natürlich diverse Modifikationen des vorausgehend beschriebenen Mehrwegeventils möglich. So kann das Raumvolumens selbstverständlich nur im Bereich der Scheibe 20 kreiszylindrisch ausgebildet sein. Anstelle des Getriebemotors 40 sind natürlich auch andere Antriebsmittel einsetzbar. Natürlich kann auch die Positionserfassung der Durchdringung 23 der Scheibe 20 bezüglich der Abführöffnungen 14, 15 und 16 technisch anders gelöst werden; so kann beispielsweise der Magnet 28 auch direkt auf der Scheibe 20 angeordnet sein und/oder auch die Betätigungselemente 34, 35 und 36 können direkt an der Wandung des Raumvolumens 10 vorgesehen sein und/oder es können andere als der beschriebene magnetische Betätigungsmechanismus vorgesehen sein. Ferner können natürlich auch mehr Abführ- und Zuführöffnungen, wie auch mehrere axiale Durchdringungen in der Scheibe vorgesehen werden, und auch die Zuführöfnungen in der gleichen Ebene wie die Abführöffnungen angeordnet sein, womit durch entsprechend platzierte Durchdringungen gezielt Auslassleitungen für das Schmiermittel miteinander in Verbindung gebracht werden können, wobei Anzahl und Positionierung der Durchdringungen bestimmen, welche Auslassleitungen miteinander in Verbindung gebracht werden können, womit sich vielfältige Variationsmöglichkeiten ergeben.

### Bezugszeichenliste

- 10: Raumvolumen
- 12: Zuführöffnung
- 14, 15, 16: Abführöffnung

- 20: Scheibe
- 23: Durchdringung
- 25: weitere Scheibe
- 28: Magnet

- 30: Platine
- 34, 35, 36: Betätigungselement

- 40: Getriebemotor
- 45: Welle

## Patentansprüche

1. Schmiermittelwegeventil, beinhaltend folgende Merkmale:
- Ein begrenztes Raumvolumen (10) mit wenigstens zwei Öffnungen (14, 15, 16) für ein Zu- und/oder Abfühlen des Schmiermittels,
- beide Öffnungen sind in einer das Raumvolumen (10) begrenzenden Ebene angeordnet, und
- der Ebene unmittelbar und im Wesentlichen dicht gegenüberliegend ist ein wenigstens verschwenkbares, motorisch antreibbares Drehelement (20) angeordnet, das derart ausgebildet und verschwenkbar ist, dass wenigstens eine der Öffnungen oder beide mit dem Raumvolumen verbindbar oder demgegenüber verschließbar sind,
- das Drehelement (20) ist mit wenigstens einer die beiden Stirnseiten des Drehelements verbindenden Durchdringung (23) ausgebildet,
- das Drehelement (20) selbst oder ein synchron mit dem Drehelement mitdrehen-des Element ist derart ausgebildet, dass eine Verdrehposition des Drehelements gegenüber dem Raumvolumen detektierbar ist, **dadurch gekennzeichnet, dass**
- das Drehelement (20) selbst oder das mitdrehende Element an der Winkel-position der Durchdringung des Drehelements mit einem Geber (28) ausgebildet ist,
- an den Winkelpositionen der Öffnungen das Wegeventil jeweils mit einem Betätigungselement (34, 35, 36) ausgebildet ist, und das jeweilige Betätigungs-element bei übereinstimmender Verdrehposition des Gebers (28) mit dem jeweiligen Betätigungselement betätigbar ist, und
- das Schmiermittelwegeventil über eine derartige Steuerung verfügt, dass bei übereinstimmender Position von Geber (28) und Betätigungselement der motorische Antrieb (40) des Drehelements stoppt.

2. Schmiermittelwegeventil nach Anspruch 1, wobei das Drehelement elektromotorisch, insbesondere über einen Getriebemotor (40) antreibbar ist.

3. Schmiermittelwegeventil nach einem der Ansprüche 1 oder 2, wobei die Ebene kreisförmig, das Raumvolumen (10) kreiszylindrisch und/oder das Drehelement (20) als eine Kreisscheibe ausgebildet sind.

4. Schmiermittelwegeventil nach einem der Ansprüche 1 bis 3, wobei die Öffnungen (14, 15, 16) mit ihren Mittelpunkten auf einer gemeinsamen Kreislinie liegend angeordnet sind.

5. Schmiermittelwegeventil nach einem der Ansprüche 3 bis 4, wobei die Hauptsymmetrieachsen der Ebene, des Raumvolumens (10), der Kreisscheibe (20) und/oder der Kreislinie übereinstimmen.

6. Schmiermittelwegeventil nach einem der Ansprüche 1 bis 5, wobei die Durchdringung (23) als eine axiale Durchdringung ausgebildet ist.

7. Schmiermitteewegeventil nach einem der Ansprüche 3 bis 6, wobei die Durchdringung (23) in der Kreisscheibe (20) von der Hauptsymmetrieachse der Kreisscheibe entsprechend dem Radius der Kreislinie der Öffnungen beabstandet ist.

8. Schmiermittelwegeventil nach einem der Ansprüche 3 bis 7, wobei die Kreisscheibe (20) außendurchmessermäßig entsprechend dem Durchmesser des kreiszylindrischen Raumvolumens ausgebildet ist.

9. Schmiermittelwegeventil nach einem der Ansprüche 1 bis 8, wobei die Vorrichtung auf der anderen der Stirnseiten des kreiszylindrischen Raumvolumens (10) wenigstens eine weitere, insbesondere außermittig angeordnete Öffnung (12), insbesondere für ein Zuführen des Schmiermittels umfasst.

10. Schmiermittelwegeventil nach einem der Ansprüche 1 bis 9, wobei der Geber als ein Magnet (28) und die Betätigungselemente (34, 35, 36) magnetisch betätigbar, insbesondere als Reed-Relais oder Hall-Sensoren ausgebildet sind.

11. Schmiermittelwegeventil nach einem der Ansprüche 1 bis 10, wobei die Betätigungselemente (34, 35, 36) auf einer bezüglich des Raumvolumens ortsfesten Platine (30) angeordnet sind.

## Claims

1. Directional lubricant valve, comprising the following features:
- a limited spatial volume (10) with at least two openings (14, 15, 16) for feeding in and/or discharging the lubricant,
- both openings are arranged in a plane which limits the spatial volume (10), and
- a rotational element (20) is arranged so as to lie opposite the plane directly and substantially closely, which rotational element (20) is at least pivotable, can be driven by motor and is configured and can be pivoted in such a way that at least one of the openings or both can be connected to the spatial volume or can be closed with respect thereto,
- the rotational element (20) is configured with at least one penetration (23) which connects the two end sides of the rotational element,
- the rotational element (20) itself or an element which co-rotates synchronously with the rotational element is configured in such a way that a rotational position of the rotational element with respect to the spatial volume can be detected, **characterized in that**
- the rotational element (20) itself or the corotating element is configured with an encoder (28) at the angular position of the penetration of the rotational element,
- the directional valve is configured in each case with an actuating element (34, 35, 36) at the angular positions of the openings, and the respective actuating element can be actuated in the case of a coinciding rotational position of the encoder (28) with the respective actuating element, and
- the directional lubricant valve has a controller such that the motor drive (40) of the rotational element stops in the case of a coinciding position of encoder (28) and actuating element.

2. Directional lubricant valve according to Claim 1, it being possible for the rotational element to be driven by electric motor, in particular via a geared motor (40).

3. Directional lubricant valve according to either of Claims 1 and 2, the plane being of circular configuration, the spatial volume (10) being of circular-cylindrical configuration and/or the rotational element (20) being configured as a circular disc.

4. Directional lubricant valve according to one of Claims 1 to 3, the openings (14, 15, 16) being arranged so as to lie with their centre points on a common circular line.

5. Directional lubricant valve according to either of Claims 3 and 4, the main axes of symmetry of the plane, of the spatial volume (10), of the circular disc (20) and/or of the circular line coinciding.

6. Directional lubricant valve according to one of Claims 1 to 5, the penetration (23) being configured as an axial penetration.

7. Directional lubricant valve according to one of Claims 3 to 6, the penetration (23) in the circular disc (20) being spaced apart from the main axis of symmetry of the circular disc in accordance with the radius of the circular line of the openings.

8. Directional lubricant valve according to one of Claims 3 to 7, the circular disc (20) being configured in terms of the external diameter in accordance with the diameter of the circular-cylindrical spatial volume.

9. Directional lubricant valve according to one of Claims 1 to 8, the apparatus comprising, on the other of the end sides of the circular-cylindrical spatial volume (10), at least one further opening (12) which is arranged, in particular, eccentrically, in particular for feeding in the lubricant.

10. Directional lubricant valve according to one of Claims 1 to 9, the encoder being configured as a magnet (28) and the actuating elements (34, 35, 36) being of magnetically actuable configuration, in particular as Reed relays or Hall sensors.

11. Directional lubricant valve according to one of Claims 1 to 10, the actuating elements (34, 35, 36) being arranged on a mounting plate (30) which is stationary with regard to the spatial volume.

## Revendications

1. Distributeur de lubrifiant comprenant les caractéristiques suivantes :
- un volume d'espace limité (10) doté d'au moins deux ouvertures (14, 15, 16) pour un acheminement et/ou une évacuation du lubrifiant,
- les deux ouvertures sont disposées dans un plan qui délimite le volume d'espace (10), et
- un élément rotatif (20) au moins pivotant à entraînement motorisé est disposé directement et pour l'essentiel proche à l'opposé du plan, lequel est configuré et pivotant de telle sorte qu'au moins l'une des ouvertures ou les deux peuvent être reliées avec le volume d'espace ou être fermées par rapport à celui-ci,
- l'élément rotatif (20) est configuré avec au moins une traversée (23) qui relie les deux côtés frontaux de l'élément rotatif,
- l'élément rotatif (20) lui-même ou un élément qui tourne en même temps que l'élément rotatif est configuré de telle sorte qu'une position de torsion de l'élément rotatif par rapport au volume d'espace peut être détectée, **caractérisé en ce que**
- l'élément rotatif (20) lui-même ou l'élément qui tourne en même temps est configuré avec un codeur (28) à la position angulaire de la traversée de l'élément rotatif,
- aux positions angulaires des ouvertures, le distributeur est à chaque fois configuré avec un élément d'actionnement (34, 35, 36) et l'élément d'actionnement correspondant peut être actionné lorsque la position de torsion du codeur (28) coïncide avec l'élément d'actionnement correspondant, et
- le distributeur de lubrifiant dispose d'une commande telle que lorsque la position du codeur (28) et celle de l'élément d'actionnement coïncident, l'entraînement motorisé (40) de l'élément rotatif s'arrête.

2. Distributeur de lubrifiant selon la revendication 1, avec lequel l'élément rotatif est à entraînement électromotorisé, notamment par le biais d'un motoréducteur (40).

3. Distributeur de lubrifiant selon l'une des revendications 1 ou 2, avec lequel le plan est configuré de forme circulaire, le volume d'espace (10) de forme cylindrique circulaire et/ou l'élément rotatif (10) sous la forme d'un disque circulaire.

4. Distributeur de lubrifiant selon l'une des revendications 1 à 3, avec lequel les ouvertures (14, 15, 16) sont disposées avec leurs points centraux sur une ligne circulaire commune.

5. Distributeur de lubrifiant selon l'une des revendications 3 à 4, avec lequel les axes de symétrie principaux du plan, du volume d'espace (10), du disque circulaire (20) et/ou de la ligne circulaire coïncident.

6. Distributeur de lubrifiant selon l'une des revendications 1 à 5, avec lequel la traversée (23) est configurée sous la forme d'une traversée axiale.

7. Distributeur de lubrifiant selon l'une des revendications 3 à 6, avec lequel l'espacement entre la traversée (23) dans le disque circulaire (20) et l'axe de symétrie principal du disque circulaire correspond au rayon de la ligne circulaire des ouvertures.

8. Distributeur de lubrifiant selon l'une des revendications 3 à 7, avec lequel le diamètre extérieur du disque circulaire (20) est configuré en correspondance avec le diamètre du volume d'espace cylindrique circulaire.

9. Distributeur de lubrifiant selon l'une des revendications 1 à 8, avec lequel le dispositif comprend sur l'autre des côtés frontaux du volume d'espace (10) cylindrique circulaire au moins une ouverture (12) supplémentaire, notamment disposée de manière excentrée, notamment pour l'acheminement du lubrifiant.

10. Distributeur de lubrifiant selon l'une des revendications 1 à 9, avec lequel le codeur est réalisé sous la forme d'un aimant (28) et les éléments d'actionnement (34, 35, 36) sont réalisés actionnables magnétiquement, notamment sous la forme de relais Reed ou de capteurs à effet Hall.

11. Distributeur de lubrifiant selon l'une des revendications 1 à 10, avec lequel les éléments d'actionnement (34, 35, 36) sont disposés sur une platine (30) en position fixe par rapport au volume d'espace.
